# EUROPÄISCHE PATENTSCHRIFT

(11) **EP 1 819 932 B1**
(45) Veröffentlichungstag und Bekanntmachung des Hinweises auf die Patenterteilung: **10.02.2010**
(21) Anmeldenummer: 05823849.4
(22) Anmeldetag: 08.12.2005
(51) Int. Cl.: F16D 33/10

(54) **VERFAHREN ZUM REGELN DER MAXIMALEN DREHZAHL EINER ARBEITSMASCHINE UND HYDRODYNAMISCHE KUPPLUNG HIERFÜR**
METHOD FOR REGULATING THE MAXIMUM SPEED OF A WORKING MACHINE AND ASSOCIATED HYDRODYNAMIC COUPLING
PROCEDE POUR REGULER LE REGIME MAXIMAL D'UNE MACHINE ET TRANSMISSION HYDRODYNAMIQUE ASSOCIEE

(30) Priorität: 10.12.2004 DE 102004059833
(43) Veröffentlichungstag der Anmeldung: 22.08.2007
(73) Patentinhaber: Voith Turbo GmbH & Co. KG, 89522 Heidenheim (DE)
(72) Erfinder: KLEY, Markus, 73479 Ellwangen (DE); ADLEFF, Kurt, 74564 Crailsheim (DE); PITTIUS, Reinhold, 74564 Crailsheim (DE)
(74) Vertreter: Schmidt, Sven Hendrik
(86) Internationale Anmeldenummer: PCT/EP2005/013149
(87) Internationale Veröffentlichungsnummer: WO 2006/061221

(56) Entgegenhaltungen:
- US-A- 3 020 719
- US-A- 3 116 608
- US-A- 3 955 368
- US-A- 4 073 139
- US-A- 6 101 810

## Beschreibung

Die Erfindung betrifft eine Verwendung einer hydrodynamischen Kupplung zum Regeln der maximalen Drehzahl einer Arbeitsmaschine, wobei die Arbeitsmaschine von einem Motor über eine hydrodynamische Kupplung angetrieben wird. Die Erfindung betrifft insbesondere eine Verwendung zum Regeln der Drehzahl eines Luftverdichters in einem Fahrzeug, der über eine hydrodynamische Kupplung von dem Antriebsmotor des Fahrzeugs, insbesondere von einem Verbrennungsmotor, angetrieben wird und beispielsweise als Hubkolben-Luftverdichter zum Versorgen des Fahrzeugdruckluftsystems ausgebildet ist.

Die Regelung der Drehzahl einer Arbeitsmaschine durch Einstellen des Füllungsgrades einer zwischen die Arbeitsmaschine und einen die Arbeitsmaschine antreibenden Motor geschalteten hydrodynamischen Kupplung Ist bekannt, siehe beispielsweise die Offenlegungsschrift WO 98/32987. Die Füllungssteuerung erfolgt dabei im wesentlichen dadurch, dass bei Erreichen eines maximalen Füllungsgrades des Arbeitsraums die Arbeitsmedlumzufuhr unterbrochen wird.

Das Dokument US 4 073 139 beschreibt eine hydrodynamische Kupplung mit einem Arbeitsraum und einem Zwischenraum sowie einer Austrittsöffnung, die nur oberhalb eines festgelegten maximalen Kupplungs-Drehmomentes wirksam wird.

Das Dokument US 6 101 810 beschreibt eine hydrodynamische Kupplung mit einem Arbeitsraum und einer Speicherkammer, wobei Arbeitsmedium zwischen der Speicherkammer und dem Arbeitsraum während des Betriebs der Kupplung verschiebbar ist. Weiterhin ist in der Speicherkammer eine Staudruckpumpe vorgesehen, die einen Rohrstutzen sowie ein am radial äußeren Ende des Rohrstutzens befindliches Mundstück aufweist, wobei das radial Innere Ende der Staudruckpumpe mit dem Arbeitsraum in Verbindung steht. Weiterhin beschreibt das Dokument ein Verfahren zum Betreiben einer solchen Kupplung, wobei bei Überschreiten eines bestimmten Temperaturwertes des Arbeitsmediums, das Volumen des im Arbeitsraum vorhandenen Arbeitsmediums verringert und das Volumen des in der Speicherkammer vorhandenen Arbeitsmediums entsprechend erhöht wird.

Die bekannte Füllungsmengenregelung Ist hinsichtlich des apparativen Aufbaus kompliziert und erfordert verschiedene Regelungskomponenten, wie Drucksensoren, Ventile und/oder Schöpfrohre. Insbesondere bei einem Einsatz einer hydrodynamischen Kupplung in einem Fahrzeug, vorteilhaft in dem Antriebsstrang zwischen einem Luftverdichter und dem Antriebsmotor, um den Luftverdichter ein- und ausschalten zu können und um gleichzeitig Schwingungen zu dämpfen und eine Übertragung von Drehmoment von dem Luftverdichter auf den Antriebsmotor beziehungsweise das Getriebe des Antriebsmotors zu vermeiden, ist der bekannte Aufbau von füllungsgeregelten hydrodynamischen Schaltkupplungen zu kompliziert und für eine Drehzahlüberwachung der Arbeitsmaschine, insbesondere des Luftverdichters, nicht optimal geeignet.

Eine weitere Möglichkeit, die maximale Drehzahl eines Fahrzeugluftverdichters zu begrenzen, wäre ein Zugriff über die Motorsteuerung auf die Motordrehzahl, um diese zu begrenzen oder abzusenken. Da jedoch der Fahrzeugmotor in erster Linie dem Antrieb des Fahrzeuges dient, wobei der Motor möglichst energieeinsparend arbeiten soll, ist ein solcher durch die Randbedingungen des Fahrzeugdruckluftsystems vorgegebener Eingriff auf die Motordrehzahl unerwünscht.

Der Erfindung liegt die Aufgabe zugrunde, eine Verwendung einer hydrodynamischen Kupplung zum Regeln der maximalen Drehzahl einer Arbeitsmaschine anzugeben, welche gegenüber dem Stand der Technik verbessert ist und insbesondere zuverlässig arbeitet und den apparativen Aufwand gegenüber bekannten Lösungen vermindert. Insbesondere soll die erfindungsgemäße Verwendung dem Regeln der maximalen Drehzahl eines Luftverdichters in einem Fahrzeug dienen, wobei der Luftverdichter Insbesondere als Hubkolben-Luftverdichter ausgebildet ist und vorteilhaft durch den Antriebsmotor des Fahrzeugs, insbesondere eine Brennkraftmaschine, angetrieben wird.

Die erfindungsgemäße Aufgabe wird durch eine Verwendung gemäß Anspruch 1 gelöst. Die Unteransprüche beschreiben vorteilhafte und besonders zweckmäßige Ausgestaltungen der Erfindung.

Die Erfindung findet Insbesondere bei einem durch eine Brennkraftmaschine eines Kraftfahrzeugs angetriebenen Luftverdichter, welcher das Kraftfahrzeugdruckluftsystem versorgt, Anwendung. Aufgrund des breiten Drehzahlfeldes des Motors und der Notwendigkeit, dass der Luftverdichter auch bei niedrigen Motordrehzahlen mit einer ausreichend hohen Drehgeschwindigkeit angetrieben wird, wird regelmäßig die Übersetzung eines Getriebes, welches im Antriebsstrang zwischen dem Motor und dem Pumpenrad der hydrodynamischen Kupplung angeordnet ist, derart groß gewählt, dass auch bei kleinen Drehzahlen des Antriebsmotors und damit der das Pumpenrad antreibenden Abtriebswelle des Getriebes die Arbeitsmaschine, das heißt der Luftverdichter, mit einer ausreichend hohen Drehzahl angetrieben wird. Dabei ist zu beachten, dass bei geringen Drehzahlen des Pumpenrads der hydrodynamischen Kupplung sich ein großer Schlupf zwischen dem Pumpenrad und dem Turbinenrad der hydrodynamischen Kupplung einstellt, das heißt, dass das Pumpenrad mit einer deutlich größeren Geschwindigkeit umläuft als das Turbinenrad. Beispielsweise läuft das Pumpenrad mit wenigstens der doppelten Geschwindigkeit um wie das Turbinenrad. Wenn nun die Motordrehzahl aufgrund der Fahrsituation des Fahrzeugs ansteigt und sich unter Umständen vervielfacht, wird entsprechend auch die Drehzahl des Pumpenrads der hydrodynamischen Kupplung erhöht. Mit dieser Drehzahlerhöhung des Pumpenrads reduziert sich der Schlupf der hydrodynamischen Kupplung deutlich. Gleichzeitig liegt in etwa oder genau dieselbe Last am Turbinenrad an, da die Leistungsaufnahme des Luftverdichters vollständig oder im wesentlichen konstant ist. Somit besteht insbesondere in diesem Anwendungsfall die Gefahr, dass es zu einem Überdrehen der Arbeitsmaschine kommt.

Hier greift die erfindungsgemäße Verwendung der hydrodynamischen Kupplung derart regelnd ein, dass ein Überdrehen der Arbeitsmaschine, insbesondere des Luftverdichters, der beispielsweise als Hubkolben-Luftverdichter ausgebildet ist, mit Sicherheit vermieden wird.

Die hydrodynamische Kupplung ist vorteilhaft als Schaltkupplung ausgebildet, das heißt gezielt mit Arbeitsmedium befüll- und entleerbar. Unter Befüllung ist dabei eine vollständige oder zumindest teilweise Befüllung zu verstehen, Die Entleerung umfasst im Sinne der Erfindung eine vollständige Entleerung oder eine Entleerung bis auf eine vorgegebene Restarbeitsmedlummenge im Arbeitsraum. Somit wird erreicht, dass in einem ersten Zustand Drehmoment vom Pumpenrad auf das Turbinenrad übertragen wird, nämlich dann, wenn der Arbeitsraum teilweise oder vollständig gefüllt ist, und in einem zweiten Zustand kein oder im wesentlichen kein Drehmoment vom Pumpenrad auf das Turbinenrad übertragen wird, wenn der Arbeitsraum vollständig oder bis auf eine vorgegebene Restarbeitsmediummenge entleert ist. Gemäß eines besonderen Zustandes wird auch im nicht angetriebenen Zustand der Arbeitsmaschine ein vorbestimmter (geringer) Arbeitsmedlumstrom durch die hydrodynamische Kupplung geleitet, um die hydrodynamische Kupplung dadurch zu kühlen. In der Regel wird jedoch die hydrodynamische Kupplung vollständig entleert, weil eine solche Kühlung häufig nicht erforderlich ist.

Gemäß der erfindungsgemäßen Verwendung kann die Drehzahlüberwachung ohne Schalten eines Ventils erfolgen. Diese Ausführungsform der Erfindung macht von der Erkenntnis Gebrauch, dass sich die Meridianströmung im Arbeitsraum der hydrodynamischen Kupplung in Abhängigkeit der Drehzahl der hydrodynamischen Kupplung, insbesondere des Pumpenrads der hydrodynamischen Kupplung, verschiebt. Entsprechend wird im Arbeitsraum der hydrodynamischen Kupplung an der nach Innen gerichteten Umfangsoberfläche wenigstens eine Mündung wenigstens einer Auslassöffnung derart angeordnet, dass bei niedrigen Drehzahlen des Pumpenrads die Kreislaufströmung weitgehend oder vollständig über diese Mündung hinwegstreicht, und zwar in der Regel In radialer Umfangsrichtung, so dass kein oder allenfalls wenig Arbeitsmedium in die Mündung hinein eintritt und somit aus dem Arbeitsraum austritt. Bei hohen Drehzahlen hingegen verschiebt sich die Kreislaufströmung derart im Arbeitsraum, dass jetzt die Mündung mit einer Tangentialrichtung der Kreislaufströmung fluchtet, so dass Arbeitsmedium durch die Kreislaufströmung in die Mündung hineingepresst wird und durch die Auslassöffnung aus dem Arbeitsraum heraus austritt. Insbesondere dadurch, dass

bei niedrigem Schlupf die Meridianströmung weiter außen im Schaufelprofil von Pumpenrad und Turbinenrad liegt, das heißt, dass sich die Tangentialrichtung am radial inneren Umfang der Kreislaufströmung im Arbeitsraum radial nach außen verschiebt, findet bei der erfindungsgemäßen Positionierung der wenigstens einen Auslassöffnung auf dem Umfang des Arbeitsraums eine unmittelbare Strömung von Arbeitsmedium In die Mündung dieser Auslassöffnung hinein statt, die bei niedrigeren Drehzahlen dadurch verhindert wird, dass sich kein oder im wesentlichen kein dynamischer Druck des Arbeitsmediums in die Mündung hinein ausbildet.

Eine hydrodynamische Kupplung, die zur Verwendung gemäß der Erfindung geeignet ist, weist in ihrem Arbeitsraum auf der inneren Umfangsfläche die Mündung einer Auslassöffnung auf, die im zweiten aufsteigenden Quadranten des Pumpenrades positioniert ist. Diese Ortsangabe beruht dabei auf der theoretischen Einteilung des Umfangs des Arbeitsraums in einem Axialschnitt durch die hydrodynamische Kupplung in vier Quadranten, beginnend radial innen im Pumpenrad mit dem ersten Quadranten; dann folgt in Richtung der sich einstellenden Kreislaufströmung beim Antrieb des Pumpenrades radial außen Im Pumpenrad der zweite Quadrant. Anschließen strömt das Arbeitsmedium aus dem zweiten Quadranten in den dritten Quadranten, welcher radial außen im Turbinenrad ausgebildet ist und wird schließlich in den vierten Quadranten radial nach innen verzögert, der radial innen im Turbinenrad ausgebildet ist.

Um ein Überstreichen der Mündungsfläche durch Arbeitsmedium bei niedrigen Drehzahlen des Pumpenrads sicherzustellen, im Hinblick darauf, dass kein oder im wesentlichen kein Arbeitsmedium in die Mündung hineintritt und somit den Arbeitsraum verlässt, kann in Strömungsrichtung gesehen vor der Mündung ein radial nach innen herausragender Vorsprung an der Inneren Oberfläche des Pumpenrads vorgesehen sein. Insbesondere wenn dieser Vorsprung in Form einer Schanze ausgebildet ist, wie nachfolgend anhand der Figuren noch deutlicher beschrieben wird, kann ein Ausströmen von Arbeitsmedium durch die Mündung hindurch vermieden werden.

Vorteilhafte Positionen der wenigstens einen Mündung im zweiten Quadranten des Pumpenrads sind Positionen zwischen 120 Grad und 150 Grad, insbesondere zwischen 130 und 140 Grad, vorzugsweise bei genau oder etwa 135 Grad. Die Gradangaben beziehen sich dabei auf das Bogenmaß, gesehen von radial innen im Pumpenrad, sozusagen beginnend am Fuße des Arbeitsraums im Pumpenrad, in Umfangsrichtung radial nach außen bis zum radial äußeren Ende des Pumpenrades, bei welchem 180 Grad erreicht werden.

Die Erfindung soll nachfolgend anhand eines Ausführungsbeispiels näher beschrieben werden.

Es zeigen:
- Figur 1: schematisch drei verschiedene Betriebszustände einer erfindungsgemäß ausgebildeten hydrodynamischen Kupplung, beginnend bei einer niedrigen Drehzahl über eine mittlere Drehzahl bis hin zu einer hohen Drehzahl;
- Figur 2: einen vergrößerten Ausschnitt aus der Figur 1, in welchem die erfindungsgemäß ausgeführte Mündung im Pumpenrad zu erkennen ist;
- Figur 3: die Drehzahl eines Luftverdichters (Kompressors) über der Drehzahl des Motors in einem Fahrzeug;
- Figur 4: das zugehörige Kennliniendiagramm der erfindungsgemäß ausgebildeten hydrodynamischen Kupplung.

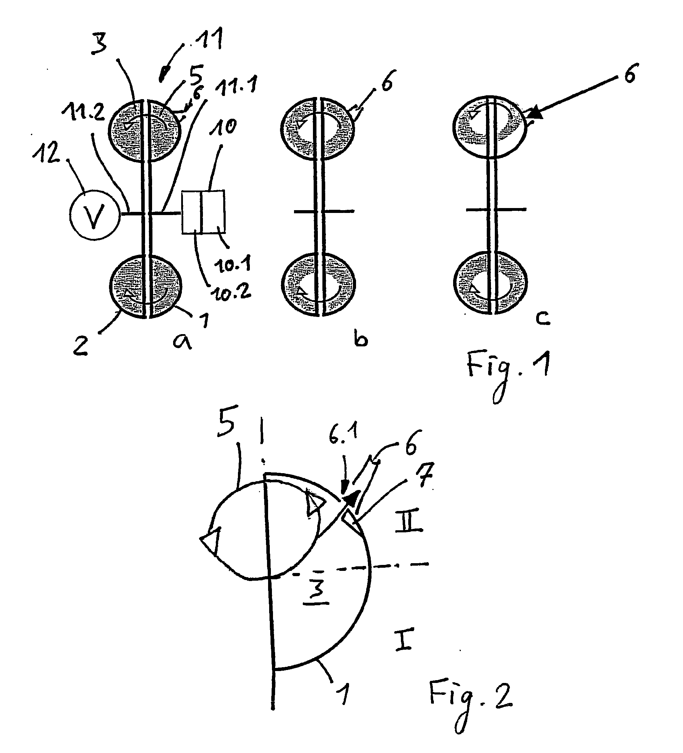

In der Figur 1 ist schematisch eine hydrodynamische Kupplung 11 dargestellt, welche in die Triebverbindung zwischen einem Motor 10 und einer Arbeitsmaschine 12 geschaltet ist. Der Motor 10 umfasst dabei einen Verbrennungsmotor 10.1 mit einem daran angeschlossenen Getriebe 10.2. Eine Abtriebswelle des Getriebes 10.2 ist mit der Antriebsseite 11.1, umfassend das Pumpenrad 1 der hydrodynamischen Kupplung 11, verbunden. Die Abtriebsseite 11.2 der hydrodynamischen Kupplung, umfassend das Turbinenrad 2, ist mit der Arbeitsmaschine 12 verbunden, welche ein Luftverdichter ist. Selbstverständlich kann in die Verbindung zwischen dem Motor 10 beziehungsweise dem Getriebe 10.2 und dem Pumpenrad 1 und in die Verbindung zwischen dem Turbinenrad 3 und der Arbeitsmaschine 12 jeweils ein weiteres Getriebe beziehungsweise eine Übersetzung angeordnet sein, um die gewünschten Drehzahlverhältnisse einzustellen. Auch ein zusätzliches Getriebe bzw. eine Übersetzung auf nur einer Seite der Kupplung 11 ist möglich.

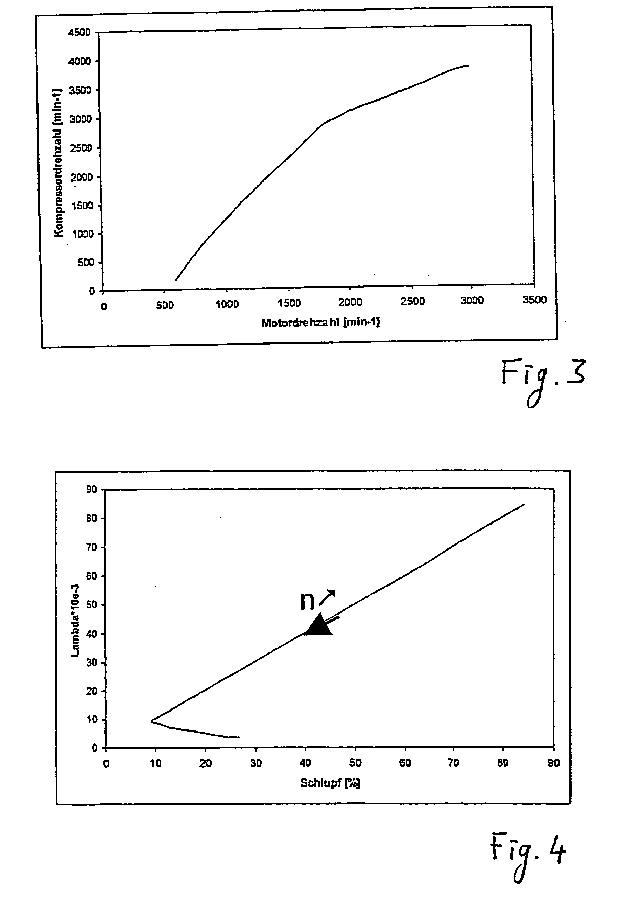

In der Figur 1 a ist schematisch der Zustand der hydrodynamischen Kupplung 11 dargestellt, bei welchem das Pumpenrad 1 mit einer verhältnismäßig kleinen Drehzahl durch den Motor 10 angetrieben wird. Dementsprechend wird sich ein großer Schlupf zwischen dem Pumpenrad 1 und dem Turbinenrad 2 einstellen, und beispielsweise ein solches Drehzahlverhältnis zwischen dem Motor 10 und der Arbeitsmaschine 12 (Kompressor), wie es dem linksseitigen Bereich des in der Figur 3 dargestellten Graphen entspricht.

Bei solchen niedrigen Drehzahlen der hydrodynamischen Kupplung 11 stellt sich ein verhältnismäßig großer Schlupf zwischen dem Pumpenrad 1 und dem Turbinenrad 2 ein, wie er beispielsweise im rechtsseitigen Bereich des Graphen in der Figur 4 dargestellt ist. Dabei steht in der Figur 4 der Buchstabe "n" für die Drehzahl des Pumpenrads, wobei der Schlupf entsprechend des dicken Pfeils in der Figur 4 mit zunehmender Drehzahl n absinkt.

In der Figur 1b ist schematisch der Zustand derselben hydrodynamischen Kupplung 11, wie sie in der Figur 1a dargestellt ist, gezeigt, jedoch bei einer größeren Drehzahl. Es bildet sich deutlich eine Ringströmung innerhalb des Arbeitsraums 3 aus, wobei jedoch diese Ringströmung noch im wesentlichen die gesamte innere Umfangsfläche des Arbeitsraums 3, in einem Axialschnitt gesehen, überstreicht.

In der Figur 1c ist dieselbe Kupplung 11 bei einer hohen Drehzahl gezeigt, das heißt bei einer Drehzahl, welche größer ist als dem in der Figur 1b gezeigten Zustand. Wie man sieht, hat sich bei dieser Drehzahl die Ringströmung im Arbeitsraum 3 im Verhältnis zu dem Zustand in der Figur 1b radial nach außen verschoben, das heißt, der innere Umfangsbereich der Ringströmung ist radial nach außen im Arbeitsraum 3 gewandert. Die sich somit ergebende Kreislaufströmung 5 weist im Bereich ihres inneren Umfangs im Axialschnitt durch den Arbeitsraum 3 gesehen eine Tangentialrichtung auf, die direkt in die Mündung der Auslassöffnung 6 gerichtet ist, so dass Arbeitsmedium aus der Auslassöffnung 6 durch den sich einstellenden dynamischen Druck in die Mündung der Auslassöffnung 6 hinein herausgedrückt wird.

In der Figur 2 ist der in dem Pumpenrad 1 ausgebildete Bereich des Arbeitsraums 3 nochmals vergrößert herausgestellt. Wie man sieht, ist auf dem inneren Umfang des Arbeitsraums 3 im Pumpenrad 1 in der Radialrichtung gesehen vor der Mündung 6.1 des Auslasses 6 ein Vorsprung angeordnet, der radial nach innen in den Arbeitsraum 3 hineinragt. Dieser Vorsprung 7, welcher in Form einer Schanze ausgebildet ist, stellt sicher, dass bei Drehzahlen unterhalb der maximal zulässigen Drehzahl des Pumpenrads kein oder im wesentlichen kein Arbeitsmedium durch den Auslass 6 heraustritt, sondern die Kreislaufströmung 5 über die Mündung 6.1 in der radialen Umfangsrichtung hinwegströmt.

Wie man in der Figur 3 sieht, kann man in dem gezeigten axialen Querschnitt durch den Arbeitsraum 3 den Arbeitsraum 3 in Quadranten unterteilen, von denen der erste Quadrant I und der zweite Quadrant II den Bereich des Arbeitsraumes 3, welcher im Pumpenrad 1 ausgebildet ist, in zwei gleich große Teile unterteilen.

Der erste Quadrant I liegt dabei radial innerhalb des zweiten Quadranten II, wobei die beiden Quadranten I, II spiegelbildlich zueinander über eine achsparallele Spiegelachse sind.

Die Mündung 6.1 des Auslasses 6 liegt, wie man sieht, in etwa oder genau in der Mitte des Umfangsbogens, welcher die innere Oberfläche des Außenumfangs des Arbeitsraumes 3 in dem zweiten Quadranten II darstellt. In Grad ausgedrückt bedeutet dies, die Mündung 6.1 liegt auf etwa 135 Grad, nämlich in der Mitte zwischen dem radial inneren Beginn des zweiten Quadranten II bei 90 Grad und dem radial äußeren Ende des Quadranten II bei 180 Grad.

In der Figur 4 ist herausgestellt, wie mit zunehmender Drehzahl des Pumpenrads beziehungsweise des Turbinenrads, wobei sich die Drehzahl des Turbinenrads in Abhängigkeit der Drehzahl des Pumpenrads und des Schlupfes in der hydrodynamischen Kupplung einstellt, der Lambda-Wert, welcher auch als Leistungszahl von hydrodynamischen Kupplungen bekannt ist, verkleinert. Bei einem Schlupf von etwas unterhalb von 10 Prozent, das heißt, das Turbinenrad läuft mit einer Zehntel-Drehzahl der Drehzahl des Pumpenrads um, bricht die Kennlinie zusammen, es findet keine weitere Schlupfreduzierung statt.

## Patentansprüche

1. Verwendung einer hydrodynamischen Kupplung (11) zum Regeln der maximalen Drehzahl einer Arbeitsmaschine (12), wobei die hydrodynamische Kupplung (11) die folgenden Merkmale aufweist:
ein Pumpenrad (1) und ein Turbinenrad (2), die miteinander einen torusförmigen Arbeitsraum (3) ausbilden;
der Arbeitsraum (3) ist mit einem Arbeitsmedium zum Übertragen eines Drehmomentes von dem Pumpenrad (1) auf das Turbinenrad (2) befüllbar;
der Arbeitsraum (3) weist innen auf seiner Umfangsfläche eine Mündung (6.1) einer Auslassöffnung (6) auf;
die Mündung (6,1) ist in einem Axialschnitt durch den Arbeitsraum (3) und in Richtung der Kreislaufströmung (5) im Arbeitsraum (3) gesehen im zweiten aufsteigenden Quadranten (II) des Pumpenrads (1) positioniert;
**dadurch gekennzeichnet, dass**
bei Drehzahlen der Antriebsseite (11.1) und/oder Abtriebsseite (11.2) der hydrodynamischen Kupplung (11) oberhalb eines vorgegebenen, maximal zulässigen Wertes eine Verminderung des Arbeitsmediums im Arbeitsraum (3) durch Verschieben einer Kreislaufströmung (5) von Arbeitsmedium im Arbeitsraum (3), radial nach außen, in eine Position erfolgt, in welcher die Mündung (6.1) der Auslassöffnung (6) im Arbeitsraum (3), welche zum Abführen von Arbeitsmedium aus dem Arbeitsraum (3) vorgesehen ist, mit der Tangentialrichtung der Kreislaufströmung (5) fluchtet oder im wesentlichen fluchtet, so dass Arbeitsmedium durch direktes Anströmen der Mündung (8.1) aus dem Arbeitsraum (3) austritt, wohingegen bei Drehzahlen bis zu dem maximal zulässigen Wert die Kreislaufströmung (5) weitgehend oder vollständig über die Mündung (6.1) hinwegstreicht.

2. Verwendung einer hydrodynamischen Kupplung (11) gemäß Anspruch 1, **dadurch gekennzeichnet, dass** in Richtung der Kreislaufströmung (5) gesehen auf der inneren Umfangsfläche des Arbeitsraums (3) vor der Mündung (6.1), insbesondere unmittelbar angrenzend an die Mündung (6.1), ein Vorsprung (7) angeordnet ist.

3. Verwendung einer hydrodynamischen Kupplung (11) gemäß Anspruch 2, **dadurch gekennzeichnet, dass** der Vorsprung (7) in Richtung der Kreislaufströmung (5) gesehen die Form einer Schanze aufweist.

4. Verwendung einer hydrodynamischen Kupplung (11) gemäß einem der Ansprüche 1 bis 3, **dadurch gekennzeichnet, dass** die Mündung (6.1) Im Bereich der radialen Umfangsfläche, beginnend radial innen im Arbeitsraum (3) in dem Pumpenrad (1) zwischen 120 und 150 Grad und insbesondere zwischen 130 und 140 Grad angeordnet ist.

5. Verwendung einer hydrodynamischen Kupplung (11) gemäß einem der vorhergehenden Ansprüche, **dadurch gekennzeichnet, dass** die Arbeitsmaschine (12) mittels eines Motors (10) über die hydrodynamische Kupplung (11) angetrieben wird.

6. Verwendung einer hydrodynamischen Kupplung (11) gemäß Anspruch 5, **dadurch gekennzeichnet, dass** die Arbeitsmaschine (12) als Luftverdichter in einem Fahrzeug ausgeführt ist und eine Druckluftanlage des Fahrzeugs speist, und die Arbeitsmaschine (12) zwischen einem Arbeitszustand, in welchem sie über den teilweise oder vollständig gefüllten Arbeitsraum (3) der hydrodynamischen Kupplung (11) von dem Motor (10), der gleichzeitig das Fahrzeug antreiben kann und insbesondere als Verbrennungsmotor ausgeführt ist, angetrieben wird, und einem Ruhezustand, in welchem sie durch den vollständig oder bis auf eine vorgegebene Restarbeitsmediummenge entleerten Arbeitsraum (3) der hydrodynamischen Kupplung (11) aus einer Triebverbindung mit dem Motor (10) heraus geschaltet ist, wechselseitig geschaltet wird.

## Claims

1. The use of a hydrodynamic coupling (11) for the control of the maximum speed of a work machine (12), with the hydrodynamic coupling (11) having the following features:
a pump wheel (1) and a turbine wheel (2) which jointly form a toroidal working chamber (3), the working chamber (3) can be filled with a working medium for transferring a torque from the pump wheel (1) to the turbine wheel (2), the working chamber (3) comprises on the inside of its circumferential surface an orifice (6.1) of an outlet opening (6), the orifice (6.1) is positioned in the second rising quadrant (II) of the pump wheel (1), as seen in an axial sectional view through the working chamber (3) and in the direction of the cycle flow (5) in the working chamber (3), **characterized in that** at speeds of the drive side (11.1) and/or driven side (11.2) of the hydrodynamic coupling (11) above a predetermined, maximally permissible value there is a reduction of the working medium in the working chamber (3) by displacement of a cycle flow (5) of working medium in the working chamber (3) radially to the outside to a position in which the orifice (6.1) of the outlet opening (6) in the working chamber (3) which is provided for discharging working medium from the working chamber (3) is in alignment with the tangential direction of the cycle flow (5), or is substantially in alignment with the same, so that the working medium will exit by direct inflow of the orifice (6.1) from the working chamber (3), whereas the cycle flow (5) will pass substantially or completely over the orifice (6.1) at speeds up to the maximum permissible value.

2. The use of a hydrodynamic coupling (11) according to claim 1, **characterized in that** a projection (7) is arranged on the inner circumferential surface of the working chamber (3) before the orifice (6.1), especially directly adjacent to the orifice (6.1), when seen in the direction of the cycle flow (5).

3. The use of a hydrodynamic coupling (11) according to claim 2, **characterized in that** the projection (7) has the shape of a ski jump, as seen in the direction of the cycle flow (5).

4. The use of a hydrodynamic coupling (11) according to one of the claims 1 to 3, **characterized in that** the orifice (6.1) is arranged in the region of the radial circumferential surface, starting radially inside in the working chamber (3) in the pump wheel (1) between 120 and 150 degrees and especially between 130 and 140 degrees.

5. The use of a hydrodynamic coupling (11) according to one of the preceding claims, **characterized in that** the work machine (12) is driven by means of a motor (10) via the hydrodynamic coupling (11).

6. The use of a hydrodynamic coupling (11) according to claim 5, **characterized in that** the work machine (12) is arranged as an air compressor in a vehicle and supplies a compressed-air system of the vehicle, and the work machine (12) is switched in an alternating fashion between a working state in which it is driven by the motor (10) via the partly or completely filled working chamber (3) of the hydrodynamic coupling (11), which motor can simultaneously drive the vehicle and is arranged especially as an internal combustion engine, and an idle state in which it is switched out of a drive connection with the motor (10) by the working chamber (3) of the hydrodynamic coupling (11) which is discharged completely or up to a predetermined residual working medium quantity.

## Revendications

1. Utilisation d'un embrayage hydrodynamique (11) pour régler la vitesse de rotation maximale d'une machine de travail (12), l'embrayage hydrodynamique (11) présentant les caractéristiques suivantes :
un émetteur (1) et une turbine réceptrice (2), constituant ensemble une chambre de travail en forme de tore (3) ;
ladite chambre de travail (3) peut être remplie de fluide pour transmettre un couple depuis ledit émetteur (1) à ladite turbine réceptrice (2) ;
ladite chambre de travail (3) présent à l'intérieur sur sa surface périphérique une embouchure (6.1) d'un orifice d'évacuation (6) ;
vue sur une coupe axiale à travers ladite chambre de travail (3) et en direction du flux de circulation (5) dans ladite chambre de travail (3), ladite embouchure (6.1) est positionnée dans le second quadrant ascendant (II) dudit émetteur (1) ;
**caractérisée en ce**ci que
pour des vitesses de rotation côté entraînement (11,1) et/ou côté sortie (11.2) de l'embrayage hydrodynamique (11) supérieures à une valeur maximale admissible prédéterminée, une diminution du fluide dans ladite chambre de travail (3) a lieu par la formation d'un flux de circulation (5) dudit fluide dans ladite chambre de travail (3), de manière radiale vers l'extérieur, vers une position dans laquelle se trouve ladite embouchure (6.1) dudit orifice d'évacuation (6) dans ladite chambre de travail (3), ledit orifice étant prévu pour évacuer du fluide hors de ladite chambre de travail (3), le fluide fuit ou fuit en substance avec une direction tangentielle dudit flux de circulation (5), si bien que le fluide afflue vers ladite embouchure (6.1) et sort de ladite chambre de travail (3), alors que, pour des vitesses de rotation allant jusqu'à la valeur maximale admissible, ledit flux de circulation (5) passe en grande partie ou complètement par-dessus ladite embouchure (6.1).

2. Utilisation d'un embrayage hydrodynamique (11) selon la revendication 1, **caractérisée en ce**ci que, vu dans la direction dudit flux de circulation (5) d'un côté de la surface périphérique de ladite chambre de travail (3) avant ladite embouchure (6.1), en particulier immédiatement adjacente à ladite embouchure (6.1), une saillie (7) est disposée.

3. Utilisation d'un embrayage hydrodynamique (11) selon la revendication 2, **caractérisée en ce**ci que ladite saillie (7), vu dans la direction dudit flux de circulation (5), présente la forme d'un tremplin.

4. Utilisation d'un embrayage hydrodynamique (11) selon une des revendications 1 à 3, **caractérisée en ce**ci que ladite embouchure (6.1) est disposée au niveau de la surface périphérique radiale, à commencer à l'intérieur de ladite chambre de travail (3) dans ledit émetteur (1) entre 120 et 150 degrés et en particulier entre 130 et 140 degrés.

5. Utilisation d'un embrayage hydrodynamique (11) selon une des revendications précédentes, **caractérisée en ce**ci que ladite machine de travail (12) est entraînée par un moteur (10) à travers un embrayage hydrodynamique (11).

6. Utilisation d'un embrayage hydrodynamique(11) selon la revendication 5, **caractérisée en ce**ci que ladite machine de travail (12) est réalisée comme compresseur d'air dans un véhicule et alimente une installation à air comprimé du véhicule et que ladite machine de travail (12) commute tour à tour entre un état de travail dans lequel elle est entraînée à travers ladite chambre de travail (3) dudit embrayage hydrodynamique (11), remplie entièrement ou partiellement, par ledit moteur (10), pouvant en même temps entraîner le véhicule et étant en particulier réalisé comme moteur à combustion, et un état de repos dans lequel elle est débrayée de l'accouplement d'entraînement avec le moteur (10) par ladite chambre de travail (3) dudit embrayage hydrodynamique (11), complètement vidée ou vidée jusqu'à une quantité résiduelle prédéterminée.
